## Europäisches Patentamt

## European Patent Office

## Office européen des brevets

(11) Veröffentlichungsnummer: **0 216 003**
**A2**

(12) **EUROPÄISCHE PATENTANMELDUNG**

(21) Anmeldenummer: **86104651.4**

(22) Anmeldetag: **03.04.86**

(51) Int. Cl.⁴: **A 01 B 49/06**
**A 01 B 79/02**

(30) Priorität: **06.04.85 DE 3512658**

(43) Veröffentlichungstag der Anmeldung:
**01.04.87 Patentblatt 87/14**

(84) Benannte Vertragsstaaten:
**AT CH FR GB LI**

(71) Anmelder: **Weichel, Ernst**
**Bahnhofstrasse 1**
**D-7326 Heiningen(DE)**

(72) Erfinder: **Weichel, Ernst**
**Bahnhofstrasse 1**
**D-7326 Heiningen(DE)**

(74) Vertreter: **Seemann, Norbert W.**
**Brehmstrasse 37**
**D-7320 Göppingen(DE)**

(54) Verfahren und Gerätesystem zur Bodenlockerung, Saatbettherrichtung und Bestellung.

(57) Ein Verfahren zur Bodenlockerung, Saatbettherrichtung und Bestellung mit Arbeitsgeräten, die einzeln oder miteinander in verschiedener Weise und jeweils mindestens zeitweise auch mit einer Sä- oder Pflanzmaschine kombiniert an Traktoren anbaubar sind, sieht vor, daß die Bestellung des Bodens (10c) wahlweise sowohl separat, als auch gleichzeitig mit der Bodenlockerung bzw. Saatbettherrichtung und sowohl mit der bei der Lockerung üblichen, als auch mit der gegenüber dieser um ein mehrfaches größeren Arbeitsbreite durchführbar ist, wobei vor allem die Bodenlockerung wahlweise sowohl mit derselben (10a) oder mit einem Bruchteil der Arbeitsbreite der Saatbettherrichtung und so durchgeführt wird, daß jedes von der Gerätekombination (9) bearbeitete Ackerbeet (10a) unmittelbar an das bei der vorhergehenden Fahrt über das Feld bearbeitete Ackerbeet (10b) anschließt.

*Fig. 1*

Ernst Weichel

Bahnhofstraße 1

D 7326  Heiningen

0216003

11.02.1985

## Verfahren und Gerätesystem zur Bodenlockerung, Saatbettherrichtung und Bestellung

Der vorliegenden Erfindung liegt die Aufgabe zugrunde, die bisher übliche Bodenbearbeitung und Bestellung mit den (meist in getrennten Arbeitsgängen eingesetzten) Arbeitsgeräten Pflug, Grubber, Saatbettkombination, Drillmaschinen usw. zu verbessern. Daß diese Aufgabe dringend ist, zeigen die zunehmenden Diskussionen z.B. über Bodenverdichtungen, Erosion, Auswaschung und der schneller als die Erträge steigende Verbrauch an Handelsdüngern, Pestiziden usw.

- 2 -

Die Erfindung geht von der Tatsache aus, daß das Ziel jeder Bodenbearbeitung das "Saatbett", d.h. eine feinkrümelige Oberschicht auf einer unverdichteten (aber nicht "überlockerten", sondern "abgesetzten") Krume ist, und daß es bekannt ist, daß das tiefwendende Pflügen oder grobschollige Grubbern eines Feldes zunächst einmal von diesem Ziel weg führt: Es schafft einen Bodenzustand, der nur mit weiterem Arbeits- und Zeitaufwand (und damit Feldüberfahrten, und oft auch mit zweifelhaftem Erfolg) in ein Saatbett verwandelt werden kann.

Daraus ergibt sich, daß der sog. biologisch-technische Fortschritt der letzten Jahrzehnte - die Hochmechanisierung auf der seinen Seite und die Spezialisierung der Betriebe auf der anderen Seite - zu einer Verschlechterung, ja Gefährdung der natürlichen Bodenfruchtbarkeit geführt hat. Die jetzt akut gewordenen Probleme mit den Böden wurden aber nicht nur durch Schademissionen auf die Felder, auch nicht nur durch den Einsatz von chemischen Düngemitteln, Pestiziden, auch nicht nur durch einseitigere Fruchtfolgen oder Betriebskonzepte, auch nicht nur durch schwere Schlepper, Erntemaschinen, Transportfahrzeuge usw., sondern auch dadurch verursacht, daß die Böden entweder zu oft oder zu tief oder zu
intensiv oder in zu feuchtem Zustand gewendet, gemischt,
zerkleinert und dadurch das Bodenleben zu sehr geschädigt wurde.

Die Tatsache, daß die meisten Betriebsleiter der Landwirtschaft bis heute an dieser übermäßigen, meist
auch "schematischen" Intensivbearbeitung festgehalten,
bzw. diese mit der Anschaffung schwererer Schlepper
gar immer mehr forciert haben, obwohl eine Minderheit
von Betriebsleitern - zum Teil seit Jahrzehnten -
auf das Pflügen mindestens weitgehend verzichtet,
d.h. mit bestem Erfolg die sog. "reduzierte" oder
"Minimal-Bodenbearbeitung" (ja sogar die Direktsaat
ohne Bodenbearbeitung) anwendet, kann zu einem wesentlichen Teil dadurch erklärt werden, daß die Sämaschinen
überwiegend für sich allein am Schlepper angehängt
wurden und den sog. "reinen Tisch" (also einen unmittelbar oder einige Zeit vorher gepflügten Acker) vorausgesetzt haben, soweit sie mit "normalen" Säscharen
ausgerüstet waren. Andernfalls wären Verstopfungen
aufgetreten und das Saatgut wäre ungleich abgelegt
worden.
Deshalb wird heute die "reduzierte Bodenbearbeitung"
oder die sog. "pfluglose" Bodenbearbeitung, bzw.
"die Direktsaat" empfohlen, aber nur von einer Minderheit
vorwiegend größerer Betriebe mit besonders tüchtigen
Betriebsleitern praktiziert.

- 4 -

Einigermaßen verständlich wird dieser Verlauf der Entwicklung und die heutige Situation, wenn man bedenkt, daß fast alle Schlepper-Drillmaschinen aus einer Gespann-Drillmaschine entwickelt wurden und deshalb überwiegend nur die Funktionen:

"Speicherung und dosierte Abgabe von Saatgut",

"Herstellen einer Saatrille",

"Ablage des Saatkorns" und

"Zustreichen"

übernehmen. "Normale" Säschare neigen auch zum Verstopfen durch Ernterückstände, setzen also den sog. "reinen Tisch" und damit das vorangegangene Pflügen voraus.

Diese "konservative" Sätechnik ist also eine Hauptursache dafür, daß heute immer noch so viel und so oft gepflügt, bzw. grobschollig tief gegrubbert wird, obwohl bekannt ist, daß dadurch die Kosten erhöht werden und dem Bodenleben oft mehr geschadet als genützt wird.

Die Verbesserung der Drilltechnik ist also nicht nur notwendig, sondern sie kann einen über das Drillen hinausgehenden Beitrag zur Lösung der akut gewordenen Probleme der gesamten Bodenbewirtschaftung und damit zur Erhaltung und Verbesserung der natürlichen Bodenfruchtbarkeit leisten.

- 5 -

Die vorliegende Erfindung will daher folgende Verbesserungen erreichen:

Die Säorgane müssen so verbessert werden, daß nicht nur auf einem gepflügten Feld, sondern auch auf mit Ernterückständen bedeckten Böden verstopfungsfrei gearbeitet werden kann. Diese Bedingung sollte aber nicht nur z.B. durch "Breitsaat" erfüllbar sein: Ein und dieselbe Drillmaschine sollte sowohl zur Breitsaat, als auch zur Band- oder Drillsaat geeignet, also ggf. mit auswechselbaren Säscharen ausgestaltet werden können.

Wenn die Voraussetzungen dafür gegeben sind, sollte auch ohne vorherige Saatbettherrichtung bzw. Bodenbearbeitung, d.h. direkt auch in ein z.B. mit Stroh, Rübenblatt, Körnermaisstroh usw. bedecktes Stoppelfeld (oder in einen nicht zu hohen Gründüngungsbestand) gedrillt werden können.

Diese "Direktsaat", bzw. die "konservierende Bodenbearbeitung" ist seit Jahren bei Körnermais und Zuckerrüben mit Erfolg, d.h. ohne Ertragsabfall praktiziert worden. Auch Versuche mit Wintergerste oder Winterweizen sind erfolgreich verlaufen.

- 6 -

Die Direktsaat spart zweifellos die meisten Kosten und besonders viel Arbeit. Sie erlaubt größte Flächenleistung und damit die Bestellung zum richtigen Zeitpunkt (auch unter schwierigen Witterungsverhältnissen, wenn mit anderen Verfahren gar nicht mehr gesät werden könnte). Sie sollte daher auf allen Böden bevorzugt angewandt werden, die (z.B. nach einer Zwischenfrucht oder nach einem bei gutem Wetter geernteten Kartoffelbestand) auf Spatentiefe gut durchwurzelt bzw. gekrümelt, also "gar" sind und keine Verdichtungen aufweisen. Diese Böden können ohne vorheriges tiefes Grubbern oder gar wendendes Pflügen bestellt werden. Das spart Zeit, Kosten und verringert Wasserverluste, Auswaschung und Erosion bei besten Erträgen.

Ob die Säschare bei der Direktsaat in den im übrigen unbearbeitet bleibenden Boden z.B. nur eine Rille machen, in die das Saatgut abgelegt wird, oder ob die oberste Bodenschicht z.B. von einer "leichten Rotoregge" bzw. Fräse, auf welche die Drillmaschine aufgebaut wird, gekrümelt und das Saatgut (entweder vor oder hinter den rotierenden Werkzeugen) abgelegt und leicht zugedeckt wird, ist zweitrangig:
Wichtig ist, daß ein äußerst flaches, gekrümeltes Saatbett von nur wenigen Zentimetern Tiefe hergestellt wird, und daß alle Saatkörner in gleichmäßig geringer Tiefe

- 7 -

auf den unbearbeiteten Horizont abgelegt, zuerst mit etwas Feinerde und dann mit den Ernterückständen usw. nicht zu dick bedeckt werden.

Dieses Säverfahren ist z.B. im Frühjahr auf solchen Böden, die im Herbst (oder gar im Winter) eine Gründüngung getragen haben, (vor deren Bestellung aber gründlich bearbeitet wurden), besonders zweckmäßig und vorteilhaft. Es kann z.B. mit einer bekannten "Säschiene" durchgeführt werden, die den Vorteil hat, daß die Saatkörner in gleichmäßiger Tiefe auf einen gut mit kapillarem Wasser versorgten Horizont abgelegt, dann mit Erde und zuletzt mit Stroh bedeckt werden. Bisher ist dies nur als Breitsaat möglich, die in aller Regel eine Unkrautbekämpfung durch Herbizide voraussetzt und nicht für alle Kulturarten infrage kommt.

Dieses Verfahren ist auf schweren Böden (die im Frühjahr und im Herbst zum Saatzeitpunkt gar nicht so tief abgetrocknet sind, daß sie ohne Schaden befahren werden können), praktisch die einzige infrage kommende Methode, wenn der Boden z.B. unter einer (eventuell abfrierenden) Zwischenfrucht überwintert hat und frühzeitig bestellt werden muß. Bei allen anderen Verfahren muß entweder zu spät gesät werden, oder es werden bei zu tiefer Bodenbearbeitung kurz vor der Saat Strukturschäden verursacht.

Außerdem würde, wenn der Boden z.B. kurz vor der Saat tief bearbeitet wird, auch der Unkrautbesatz unnötigerweise vermehrt, weil dann zu viele Unkrautsamen zusammen mit dem gesäten Pflanzenbestand keimen. Sie können also nicht kurz vor der Saat vernichtet werden, wie es der Fall wäre, wenn die gründliche Bodenbearbeitung einige Zeit vorher durchgeführt wird.

Wenn also ein Betrieb einige Feldfrüchte, so wie bisher üblich, nach vorangegangener Bodenbearbeitung und Saatbettherrichtung bestellen, in anderen Fällen aber direkt oder in eine Mulchschicht säen will oder muß, dann muß seine Sämaschine nichtnur mit normalen Säscharen, sondern auch mit Roll- oder Scheibenscharen, die nicht verstopfen, ausgerüstet werden können und auch mit einem Arbeitsgerät mit rotierenden Werkzeugen zur flachen Saatbettherrichtung kombinierbar sein.

Die wahlweise Verwendung unterschiedlicher Bauarten von Säscharen für Breitsaat, Bandsaat und Reihensaat sollte aber auch bei der Direktsaat in nur sehr flach zu bearbeitenden Böden möglich sein:

Dies bedeutet, daß das Direktsäverfahren so weiterentwickelt werden sollte, daß bei Bedarf auch Reihensaat
mindestens mit Rollscharen möglich ist. Derartige
Lösungsvorschläge sind aus einer Patentanmeldung
aus dem Jahr 1980 bekannt.

Schwere Böden sind im Herbst oder im Frühjahr zu
dem Zeitpunkt, an dem (vom Kalender her) gesät werden
muß, in aller Regel nur oberflächlich so abgetrocknet,
daß die Eggenzinken und Säschare einigermaßen arbeiten
können. Sie sind aber im unteren Teil der bearbeiteten
Krume in aller Regel noch so feucht, daß jedes Befahren
mit dem Schlepperrad irreparable Bodendruckschäden
verursacht.

Deshalb sollte die Saatbettherrichtung und das Drillen
im Herbst und im Frühjahr, wenn irgend möglich, in
einem Arbeitsgang durchgeführt werden.

Die Schlepper-Anbau-Sämaschine muß also so ausgebildet
werden, daß sie außer den Funktionen der bisherigen
Drillmaschine auch die "Herrichtung eines flachen
feinkrümeligen Saatbettes" (bzw. die "Vernichtung
des etwa vorhandenen oder kurz vorher aufgelaufenen
Pflanzenbestandes" (Gründüngung, Unkraut, Ausfallgetreide der Vorfrucht), mit übernehmen kann, weil
diese Funktion immer kurz vor oder - besser - bei
der Saat durchgeführt werden muß.

Die Drillmaschinen sollten also nicht nur hinter
dem Schlepper, d.h. in einem separaten Arbeitsgang,
sondern auch in Kombination mit anderen Arbeits-

- 10 -

geräten bzw. mit Geräten zur Rückverfestigung eingesetzt werden können, um z.B. Zeit und Treibstoff zu sparen und unnötige Wasserverluste zu vermeiden.

Wie neue Systeme gezeigt haben, kann die Tieflockerung, Saatbettherrichtung, Rückverfestigung und Bestellung z.B. mit einem einbalkigen Grubber und möglichst kurz dahinter angeordnetem Zapfwellen-Zinkenrotor und angebauter Sämaschine in einem einzigen Arbeitsgang so durchgeführt werden, daß im bearbeiteten Feld keine verdichteten Schlepperspuren zurückbleiben. (Beim separaten Drillen ist dies in aller Regel unvermeidlich.)

Die Tieflockerung, Saatbettherrichtung und die Saat in einem Arbeitsgang ist aber nur dort notwendig, wo die Ackerkrume verdichtet und unbelebt ist, oder die Fahrspuren des Mähdreschers eine tiefe Lockerung erforderlich machen. Sie ist auch nur zweckmäßig, wenn z.B. eine Gründüngung sofort nach der Getreideernte, oder z.B. Winterweizen nach Kartoffeln, Zuckerrüben, Mais, unter Zeitdruck bestellt werden muß.

In vielen anderen Fällen, wenn eine Nachfrucht erst Wochen oder gar Monate nach der Vorfrucht bestellt wird, oder z.B. auf schweren Böden im Frühjahr, ist
die Tiefbearbeitung, Saatbettherrichtung und Saat
im selben Arbeitsgang mit einer Gerätekombination
dagegen unzweckmäßig, weil auf ungelockert liegenden
Stoppeln Wasserverluste verursacht werden können
und die Bodengare entweder geschädigt oder nicht
so, wie es möglich wäre, verbessert wird. Außerdem
werden bei jeder Tiefbeareitung kurz vor oder bei
der Saat zu viele Unkrautsamen von neuem in Keimposition gebracht, die gleichzeitig mit der Hauptfrucht
auflaufen. Auch die Ausfallkörner und Unkrautsamen,
die der Mähdrescher ausgestreut hat, werden durch
eine zu tiefe oder zu späte Stoppelbearbeitung meist
viel zu tief vergraben, also nicht, wie es wünschenswert
wäre, vor der Bestellung der Folgefrucht zum Keimen
angeregt, so daß sie bei oder vor der Saat der Nachfrucht vernichtet werden können.
(Jede tiefe Bearbeitung eines Stoppelfeldes sofort
nach der Ernte – als erster Arbeitsgang! – mit dem
Pflug, Schwergrubber oder der Fräse wirkt also insgesamt unkrautvermehrend! Sie vergrößert außerdem
die Wasserverluste.)


Aus diesen Überlegungen folgt, daß die Bodenbearbeitung und Fruchtfolge so geplant werden muß, daß
unmittelbar vor oder beim Drillen nur ein flaches

- 12 -

Saatbett bereitet oder direkt gesät werden kann.
Das kann entweder mit der separat an den Schlepper
angehängten, oder mit der mit einem Zinkenrotor
(bzw. einer Kreiselegge) kombinierten Sämaschine
geschehen.

Im Herbst oder sofort nach der Ernte muß aber das
Drillen auch in Kombination mit der Tieflockerung,
Saatbettherrichtung und Rückverfestigung möglich
sein.

Wenn zapfwellengetriebene Arbeitswerkzeuge zur Saatbettherrichtung und die Drillmaschine so eng wie
möglich zusammengebaut bzw. miteinander gekoppelt
werden, kann ein leichterer Schlepper oder eine Gerätekombination mit größerer Arbeitsbreite an einem schwereren
Schlepper verwendet werden.

Die Arbeitsbreite einer Drillmaschine kann aber an
sich nicht groß genug sein, weil die Steigerung der
Flächenleistung durch Erhöhung der Fahrgeschwindigkeit ihre Grenzen hat. Außerdem ermöglicht dies die
Verringerung der Anzahl der Fahrspuren pro Hektar,
die auf schweren Böden unbedingt erreicht werden
muß.

Wenn nur ein sehr flaches Saatbett hergerichtet oder
z.B. eine Untersaat in Getreide separat gesät werden
muß, ist grundsätzlich eine möglichst große Arbeitsbreite der Drillmaschine erwünscht.

Wenn dagegen das Drillen (z.B. bei der Ansaat einer
Gründüngung im Sommer oder bei der Weizenbestellung
nach Kartoffeln, Rüben, Mais usw. im Herbst) in Kombination mit der Tieflockerung und Saatbettherrichtung
durchgeführt werden muß, ist die Arbeitsbreite der
Drillmaschine durch die von der Zug- und Hubkraft
des Schleppers begrenzte Arbeitsbreite des Grubbers
festgelegt. Sie beträgt kaum mehr als 3 Meter.
Daraus folgt, daß ein Ackerbaubetrieb eigentlich
zwei Drillmaschinen benötigt, eine mit geringer Arbeitsbreite zum Anhängen an oder Aufbauen auf einer mit
einem Grubber kombinierbaren Rotoregge o.ä., und
eine mit größerer Arbeitsbreite für das separate
Drillen, (bzw. für eine breitere Rotoregge, wenn
diese so flach wie möglich eingestellt wird).

Wenn daher zeitweise separat mit möglichst großer
Arbeitsbreite und zeitweise in Kombination mit der
Bodenlockerung, Saatbettherrichtung und Rückverfestigung, also mit geringerer Arbeitsbreite gedrillt
werden muß und die Anschaffung zweier Drillmaschinen
nicht infrage kommt, muß deren Arbeitsbreite verstellbar
sein!

Es ist bekannt, eine pneumatische Drillmaschine mit
zentralem Saatgutbehälter mit unterschiedlich breiten

- 14 -

Säschartträgern auszustatten, weil das Saatgut über
Luftschläuche zu den Säscharen befördert wird.
Es ist ebenso bekannt, zeitweise zwei Drillmaschinen
nebeneinander und zeitweise nur eine davon hinter
dem Schlepper einzusetzen.

Aus diesen Gründen schlägt die Erfindung vor, Drillmaschinen mit größerer Arbeitsbreite von beispielsweise
vier Metern mit neuen Geräte-Kombinationen in der
Weise zu kombinieren, daß die Tieflockerung "zweiphasig"
mit kleinerer Arbeitsbreite und das Drillen z.B.
gleichzeitig mit jeder zweiten oder dritten Fahrt
mit entsprechend größerer Arbeitsbreite durchgeführt
werden kann.

Bei einem von diesem, in mehreren Varianten durchführbaren, Verfahren wird in einem ersten Arbeitsgang
z.B. mit der Rotoregge und Fräsmessern die gesasmte
Arbeitsbreite so flach wie möglich gekrümelt, um
alle Ausfallkörner und Unkrautsamen zum Keimen zu
bringen.

Gleichzeitig wird mit hinter dem Rotor und neben
den Radspuren des Schleppers angeordneten, senkrechten
Haltestielen mit Blattscharen so tief, wie es der
Schlepper bei diesem Arbeitsgang ziehen kann, streifenweise vorgelockert.

- 15 -

In einem zweiten Arbeitsgang (unmittelbar anschließend
oder nach einer gewissen Zeit) werden die Zwischenstreifen, insbesondere die Fahrspuren, durch <u>vor</u>
<u>der Rotoregge</u> anbringbare Haltestiele mit Lockerungs-
scharen fertig gelockert und dabei die ganze Arbeitsbreite
noch einmal (flacher oder tiefer) saatfertig gekrümelt,
d.h. das keimende oder schon aufgelaufenes Unkraut
vernichtet und die Ernterückstände gründlicher eingemischt. Gleichzeitig kann das Saatbett durch die
Packerwalze rückverdichtet und mit der Aufbau-Drillmaschine eingesät werden.

Bei diesem Verfahren wird also die Tieflockerung
z.B. auf die Arbeitsbreite 4 Meter nicht in einer
Überfahrt, sondern in zwei Überfahrten durchgeführt,
(weil dies mit einem Schlepper, der beim Pflügen
auf dieselbe Tiefe nur eine Arbeitsbreite von weniger
als 2 Meter erreicht, nicht anders zu machen ist),
aber bei der ersten Überfahrt wird <u>die gesamte Boden-</u>
<u>oberfläche flach gekrümelt,</u> um alles Unkraut, Ausfall-
körner zum Auflaufen zu bringen und die Wasserverdunstung zu unterbinden. Das ist die ideale Stoppelbearbeitung!
Wenn im zweiten Arbeitsgang die Zwischenstreifen,
insbesondere die Radspuren, fertig gelockert werden,

- 16 -

kann die Rotoregge ganzflächig ggf. auch tiefer arbeiten,
und dabei die Ernterückstände noch gründlicher einmischen.
Dabei kann gleichzeitig auch gesät werden.
Im gelockerten und eingesäten Feld bleiben jedenfalls
keinerlei Bodenverdichtungen durch die Schlepperräder
zurück.

Gemäß einer andere Variante dieses Verfahrens schlägt
die Erfindung eine Drillmaschine vor, deren "normale"
Arbeitsbreite die im Straßenverkehr zulässigen Maße
nicht überschreitet, die aber mit Säscharträgern unterschiedlicher Breite ausgerüstet - also wahlweise z.B.
sowohl in der Breite drei Meter, als auch (z.B. nach
dem Anbau ausklappbarer Seitenteile) in der Arbeitsbreite von sechs Metern verwendbar - ist. Bei der großen
Arbeitsbreite würde jedes Säschar einen Zuführungsschlauch
für das Saatgut erhalten. Bei geringer Arbeitsbreite
würden zwei Schläuche auf jedes Saatgut-Zuleitungsrohr
gesteckt und die Saatgutmenge entsprechend verringert.

Dies beseitigt einen der wichtigsten Nachteile der
bekannten Bestellkombinationen zur Bodenlockerung,
Saatbettherrichtung und Bestellung in einer einzigen
Feldüberfahrt. Die Besitzer größerer Betriebe, die
diese bisher zu schweren und teuren Gerätekombinationen
bezahlen konnten, beanstanden, daß die Flächenleistung

- 17 -

auf Feldern, die nicht tief bearbeitet werden mußten oder mehr oder weniger direkt gesät werden konnten, zu gering war. Die Besitzer von mittleren und kleineren Betrieben, für die die Flächenleistung ausgereicht hätte, können diese Kombination entweder nicht bezahlen oder sie haben keinen Schlepper, um sie zu ziehen und auszuheben. Das ist also eine Bestätigung für die These, daß die Arbeitsbreite einer mit dem Schichtengrubber und der Rotoregge kombinierbaren Sämaschine sich grundsätzlich nach der Arbeitsbreite des Schichtengrubbers und der Rotoregge richten muß, daß aber z.B. im Frühjahr, wenn nur ein flaches Saatbett hergestellt und jede entbehrliche Fahrspur vermieden werden muß, dieselbe Drillmaschine eine größere, z.B. die doppelte Arbeitsbreite haben sollte.

Wenn nur ein verhältnismäßig leichter Schlepper und eine Drillmaschine in der Arbeitsbreite 2,5 oder 3,0 Meter vorhanden ist, der die vorstehend beschriebenen Kombinationen zur zweiphasigen Arbeitsweise mit umgesetzten Werkzeugen nicht ausheben oder aus anderen Gründen nicht anwenden kann oder will, besteht bisher die Möglichkeit, z.B. einen Rotorgrubber mit der Arbeitsbreite 1,50 oder 1,75 Meter - die die Schlepper- spur abdecken sollte - zu verwenden, aber auf das gleichzeitige Drillen im selben Arbeitsgang zu verzich- ten. Das Feld würde also, je nach der

erforderlichen

- 18 -

Zugkraft, in ein oder zwei Überfahrten tief gelockert, saatfertig hergerichtet, rückverdichtet und die Drillmaschine separat gefahren.

Dies erscheint bei leichteren Schleppern (insbesondere mit Zwillings- oder Gitterrädern) am ehesten vertretbar.

Um auch mit leichten Schleppern sowohl die Bodenlockerung und Saatbettherrichtung mindestens spurdeckend, als auch das Drillen mit verhältnismäßig großer Arbeitsbreite durchführen zu können, schlägt die Erfindung ferner vor, den Schichten- oder Rotorgrubber mit (z.B. hydraulisch ausklappbaren) Spuranzeigern auszurüsten, und wie folgt einzusetzen:

In einem ersten Verfahrensschritt wird nur jede zweite Arbeitsbreite des Rotorgrubbers bearbeitet, d.h. die jeweils nächste Fahrspur des Schleppers mit dem Spuranzeiger auf dem Feld so markiert, daß bei dieser Durchfahrt das jeweils an das bearbeitete "Ackerbeet" anschließende Beet zunächst unbearbeitet bleibt. Hierbei wird auch die Sämaschine ausgeschaltet.

Im zweiten Verfahrensschritt werden mit einer aufgebauten Drillmaschine, die z.B. die doppelte Arbeitsbreite des Rotorgrubbers besitzt, die "Zwischenbeete" gelockert, saatfertig hergerichtet und (zusammen mit der Hälfte des jeweils links und rechts anschließenden, bereits vorher saatfertig gemachten) Ackerbeetes eingesät. Dieses Verfahren hat zwei entscheidende Vorteile:

Am Rotorgrubber müssen keine Stiele mit Scharen umgesetzt werden.

Die Arbeitsbreite des Rotorgrubbers beträgt nur die Hälfte oder ein Drittel der Arbeitsbreite der Drillmaschine.

Der Rotorgrubber mit Kombiwalze ist also billiger und er hat ein leichteres Gewicht, so daß er leichter auszuheben ist.

Die Sämaschine hat dagegen die doppelte (oder gar dreifache) Arbeitsbreite des Rotorgrubbers, bzw. der Gesamtbreite des Schleppers. Diese Arbeitsbreite ist also nicht durch den Zugkraftbedarf des Schleppers beim Lockern und Herrichten des Saatbettes mit rotierenden Werkzeugen begrenzt. Es verursacht also auch im Frühjahr weniger Fahrspuren und ermöglicht z.B. im Sommer den Einsatz von Hackgeräten größerer Arbeitsbreite und damit größere Flächenleistungen.

Im bearbeiteten Feld verbleibt keine einzige verdichtete Fahrspur des Schleppers!

- 20 -

In größeren Betrieben (oder z.B. in Maschinenringen) kann z.B. ein Schlepper mit einem Rotorgrubber und Spuranzeiger (ohne Drillmaschine) vorausfahren, um jedes zweite Ackerbeet zu bearbeiten, während ein zweiter Schlepper mit einem Rotorgrubber derselben Arbeitsbreite und einer Drillmaschine der doppelten (oder dreifachen) Arbeitsbreite unmittelbar anschließend die Zwischenbeete saatfertig herrichtet und gleichzeitig mit der (doppelten oder dreifachen) Arbeitsbreite der aufgebauten Drillmaschine die Bestellung durchführt.

Mit diesem System lassen sich ohne weiteres z.B. Arbeitsbreiten von zwei bis vier Metern bei der Lockerung und Saatbettherrichtung, und von sechs bis zwölf Metern bei der Saatbettherrichtung und Bestellung erreichen. Gleichzeitig wird der Materialverbrauch und das Gesamtgewicht für die Arbeitsgeräte gegenüber allen bekannten Verfahren entscheidend verringert. Dies wiederum verringert die Anforderungen an den Leistungsbedarf und das Eigengewicht des verwendeten Traktors.

Um zu vermeiden, daß die beim ersten Durchgang bearbeiteten Ackerbeete vor dem zweiten Durchgang des Drillens zu sehr abtrocknen und damit unterschiedliche Keimbedingungen entstehen würden, wenn nur

- 21 -

ein Schlepper vorhanden ist, kann dieser mit einer Drillmaschine der doppelten oder dreifachen Arbeitsbreite kombiniert werden.

Wie in Fig. dargestellt ist, kann das Feld dann auch in der Weise bearbeitet werden, daß z.B. zuerst die Beete "1" und "3" (ohne Drillmaschine), und danach das Beet "2" mit Drillmaschine bearbeitet und dabei die Hälfte der beiden Nachbarbeete "1" und "3" eingesät werden. Anschließend wird das Beet "5" gelockert, saatfertig gekrümelt und rückverfestigt und dann das Beet "4" mit den halben Nachbarbeeten "2" und "5" eingesät usw.

Wenn die Drillmaschine die dreifache Arbeitsbreite des Rotorgrubbers aufweist, kann z.B. auch zuerst das Beet "1", dann das Beet "3", dann das Beet "2" gelockert und saatfertig hergerichtet, d.h. bei Bearbeitung des Beetes "2" können die Beete "1" und "3" eingesät werden. Anschließend folgen dann die Beete "4", "6" und "5" usw.

Das Verfahren eignet sich besonders gut für große Betriebe, die bisher das Drillen wegen der zu geringen Arbeitsbreite nicht in Kombination mit der Bodenlockerung und Saatbettherrichtung durchgeführt, also schädliche Fahrspuren im bestellten Feld (oder entsprechende Wasserverluste) in Kauf genommen haben. Es eignet sich aber auch für Betriebe mit kleinen Schleppern, die bisher nur Kombinationen einsetzen konnten, deren Arbeitsbreite kleiner war als die Schlepperspur, und die wegen dieser geringen Arbeitsbreite des Drillens auch nicht an eine mechanische Unkrautbekämpfung denken konnten, also auch aus diesem Grunde glaubten, am Pflügen festhalten zu müssen, weil dies mit Schleppern jeder Größe möglich war und die anschließende Saatbettherrichtung und Bestellung mit größerer Arbeitsbreite - aber mit allen Nachteilen der zusätzlichen Fahrspuren, der überhöhten Kosten, Wasserverluste, Erosionsgefahr usw. - möglich war.

Mit dem neuen Verfahren können diese Betriebe z.B. mit kleineren Schleppern der Spurweite 1,25m, einer Arbeitsbreite des Rotorgrubbers von 1,50m und einer Drillmaschine mit 3,0m Arbeitsbreite größere Flächenleistungen als bisher erzielen und alle Fahrspuren im bearbeiteten Feld grundsätzlich vermeiden.

Auch sog. Schmalspurschlepper können (z.B. mit einem Rotorgrubber der Arbeitsbreite 1,0m und aufgebauter

- 23 -

Drillmaschine mit 3,0m Arbeitsbreite) ebenfalls bei jeder Feldüberfahrt die Zugleistung, Hubleistung und Zapfwellenleistung voll ausnützen. Diese neuen Verfahren und Geräte sind daher insbesondere auch für Kleinbetriebe in Entwicklungsländern geeignet. Ihre Vorteile sind so groß, daß alle Voraussetzungen erfüllt sind, um den die Bodenfruchtbarkeit zunehmend gefährdenden Trend zu immer größeren und schwereren Schleppern ein für allemal zu stoppen!

Das vorgeschlagene Verfahren hat aber jedenfalls den Vorteil, daß fallweise auch das separate Drillen mit großer Arbeitsbreite möglich und beim Drillen in der Kombination keine zweite Drillmaschine mit der halben Arbeitsbreite erforderlich ist.

Dieses Verfahren eignet sich außerdem auch für die Bestellung von Hackfrüchten (z.B. Kartoffeln, Zuckerrüben Mais), die später mechanisch gehackt werden sollten, das Hackgerät - z.B. eine Reihenhackfräse - also in möglichst großen Arbeitsbreiten von 4, 6 und mehr Metern mit großer Flächenleistung eingesetzt werden muß.

Bei Getreide könnte man sich auf den Standpunkt stellen, daß es genügt, wenn die Sämaschine dieselbe

- 24 -

Arbeitsbreite wie der Schichtengrubber und die Rotoregge hat, weil das Drillen keinen besonderen Arbeitsgang erfordert. Das ist in allen Betrieben, die von vornherein auf das mechanische Hacken verzichten wollen, richtig.

Das Drillen mit verhältnismäßig geringer Arbeitsbreite vergrößert aber den Zeitaufwand für das spätere Hacken. Deshalb kann durch Vorziehen der Bodenlockerung und Saatbettherrichtung in jedem zweiten "Beet" und anschließender Bearbeitung der "Zwischenbeete", bei dem jedes bereits hergerichtete Nachbarbeet mitbestellt wird, mit größerer Arbeitsbreite gedrillt und damit das mechanische Hacken "konkurrenzfähiger" gemacht werden.

Auch diese Varianten zeigen, daß es möglich ist, den Grundsatz, jede Fahrspur im gelockerten, saatfertig hergerichteten und bestellten Feld zu vermeiden, durch mehrere gleichzeitige Verbesserungen des Gesamt-Verfahrens zu erreichen.

Eine dieser Verbesserungen besteht in der Beseitigung des Nachteiles vieler bisheriger Drillmaschinen, daß deren Fahrgestell mit Laufrädern nur einen unnützen Ballast darstellt, wenn die Drillmaschine z.B.

auf einen Zinkenrotor aufgesattelt wird. Deshalb, und um die vorstehend beschriebenen, nicht immer leicht erfüllbaren,Forderungen mit einfachen, aber vielseitig verwendbaren Geräten erfüllen zu können, schlägt die Erfindung eine Drillmaschine vor, die aus folgenden, voneinander leicht trennbaren, bzw. wieder zusammensetzbaren, Baugruppen besteht:

1. "Saatgutbehälter mit Dosiervorrichtung und deren Antriebsvorrichtung, Saatgutleitungen".

2. "Fahrgestell mit Laufrädern und Dreipunkt-Anbaubock".

3. "Säscharträger mit Führungsstangen, Säscharen und Zustreichern, ggf. Druckrollen".

Der Saatgutbehälter und der Säscharträger sind durch Schnellverschlüsse leicht lösbar mit dem Fahrgestell verbunden, können also leicht abgenommen und ebenso leicht wieder angebaut werden, wenn die Drillmaschine separat am Schlepperkraftheber eingesetzt wird.

Die Rotoregge und die Kombiwalze ist mit denselben Verbindungselementen bzw. Schnellverschlüssel versehen, mit denen der Saatgutkasten und der Säscharträger der Drillmaschine an deren Fahrgestell befestigt wird, um diese Baugruppen bei Bedarf auch problemlos an der Rotoregge bzw. der Kombiwalze anbringen zu können.

0216003

Diese Gestaltung der Drillmaschine hat folgende Vorteile:

1. Der <u>Saatkasten kann wahlweise</u> auf dem Fahrgestell der Drillmaschine oder am Rahmen eines Zinkenrotors (mit möglichst günstiger Schwerpunktlage) aufgesattelt werden.

2. Der <u>Säschartträger</u> kann ebenfalls wahlweise am Fahrgestell der Drillmaschine oder am Rahmen der Rotoregge (oder an demjenigen einer Packerwalze) angekuppelt werden.

3. Das Fahrgestell mit Laufrädern bleibt beim Einbau der Drillmaschine in eine Bestellkombination stehen, belastet also nicht die Gesamtkombination.

4. Die Drillmaschine kann aber jederzeit wieder zur selbständig verwendeten Arbeitsmaschine zusammengebaut werden.

5. Damit können die Bestell-Kombinationen so kurz und leicht wie überhaupt möglich gebaut, d.h. auch von mittleren Schleppern ausgehoben werden.

6. Schwere Schlepper können Gerätekombinationen mit größerer Arbeitsbreite als bisher ziehen bzw. ausheben.

- 28 -

7. Die Sämaschine kann leichter und bequemer als bisher auf <u>unterschiedliche Reihenweiten</u> (einmal Getreide, dann Raps, dann Zuckerrüben, dann Leguminosen usw.) umgestellt werden, wenn für unterschiedliche Reihenweiten je ein entsprechend ausgerüsteter Säschartträger angeschafft wird.

8. Diese zusätzlichen Säschartträger können beliebig mit <u>unterschiedlichen Bauarten von Säscharen, Stütz- oder Druckrollen, Zustreichern usw.</u> ausgerüstet werden. Man kann daher mit ein und derselben Drillmaschine von Fall zu Fall entweder Breitsaat oder Bandsaat oder Drillsaat (auch mit Scheibenscharen) durchführen, weil das Auswechseln eines Säschartträgers einfacher ist als das Auswechseln aller Säschare.

9. <u>Der Hersteller</u> kann also ein äußerst <u>variables Drillmaschinen-System</u> liefern, das aus verschiedenen Baugruppen besteht, mit dem ein und derselbe Kunde z.B. unterschiedliche Feldfrüchte mit unterschiedlichen Sämethoden und Einstellungen säen, aber die Rüstzeiten auf ein Minimum verringern kann.

10. Dies schließt es aber nicht aus, dem einen Kunden nur eine Aufsatz-Drillmaschine mit Säschartträger zu liefern, wenn dieser grundsätzlich nur in Kombination säen will.

Einem anderen Kunden können dieselben Baugruppen an ein normales Fahrgestell angebaut geliefert werden, wenn dieser nur separat säen oder eine Gerätekombination erst später anschaffen will.

Wichtig ist aber das Verkaufsargument, daß der Kunde jederzeit entweder Baugruppen nachkaufen oder die Maschine später auseinandernehmen und den Saatkasten mit Säschartträger z.B. auf eine Rotoregge o.ä. aufsatteln kann.

11. Die Verwendung unterschiedlich breiter oder aufklappbarer Säschartträger ist bei pneumatischen Drillmaschinen am leichtesten machbar.
Ein normaler Säkasten müßte hoch genug angeordnet werden, wenn z.B. an einem Saatgutbehälter für eine 3-Meter-Maschine zeitweise auch ein 4-Meter Säschartträger angebracht werden soll und die Zahl der Saatgutschläuche des Säkastens auch für diese Arbeitsbreite reicht. (Einige Saatgutschläuche müßten schräg seitlich zu den Säscharen verlaufen.)
Man könnte in diesem Fall aber auch ein zusätzliches Transportgebläse für die Saatgutbeförderung zu den äußeren Säscharen vorsehen.

- 30 -

Um jedoch, z.B. in Großbetrieben im Frühjahr, ein flaches Saatbett von sehr großer, der Drillmaschine entsprechender, Arbeitsbreite herstellen, also im selben Arbeitsgang auch fertig drillen zu können, schlägt die Erfindung vor,    am Heck des Schleppers eine Standard-Sämaschine von z.B. 6 Metern Arbeitsbreite auf eine 3 Meter breite Gerätekombination zur Bodenlockerung, Saatbettherrichtung und Rückverfestigung aufzusatteln, und zusätzlich, z.B. am Frontkraftheber, seitlich ausladende, schwenkbare Aggregate zur Saatbettherrichtung anzubringen, die jeweils ein zusätzliches, neben der Arbeitsbreite der Heck-Kombination liegendes "Bett" bearbeiten, also mit dieser zusammen ein der Arbeitsbreite der Drillmaschine entsprechendes flaches Saatbett herrichten können.

Das ist auch die Lösung des Problems, daß die Straßenverkehrs-Zulassungsordnung bisher die übliche Arbeitsbreite beim Drillen begrenzt, d.h. verhindert hat, daß die Bauern beim Säen, das wenig Zugkraft erfordert, Arbeitsgeräte mit größtmöglicher Arbeitsbreite einsetzen können, die den vorhandenen Schlepper sinnvoll ausnützen, also die Zahl der Fahrspuren verringern und trotzdem problemlos auf Straßenfahrt umgestellt werden können.

- 31 -

Die Verwendung von Aggregaten an der Vorderseite
und Rückseite des Schleppers ermöglicht besonders
elegante Formen "teilbarer" Drillmaschinen bzw.
Bestellkombinationen:
Die hinter dem Schlepper angeordnete Drillmaschine
kann auf ein Arbeitsgerät zur Tieflockerung und Saatbettherrichtung aufgesetzt werden, das eine geringere
Arbeitsbreite hat, aber die Schlepperspuren restlos
auflockert und saatfertig herrichtet.
Die seitlich anschließenden Beete können mit ausklappbaren Säscharträgern entweder ohne Saatbettbearbeitung
eingesät werden (wenn der Boden in Ordnung ist),
oder von den am Frontkraftheber angebrachten klappbaren
Rotoreggen saatfertig gemacht werden.

Das am Frontkraftheber anzubringende Aggreat mit
z.B. zwei seitlich auskragend angebrachten, von einem
gemeinsamen Zentralgetriebe über Gelenkwellen antreibbaren Rotoreggen, eignet sich außerdem auch z.B.
zur Kombination mit einem am Heckkraftheber angebrachten
Drehpflug, d.h. zur Zerkleinerung der bei der vorhergehenden Fahrt gepflügten Furchen. Dabei wird jeweils
eine der beiden Rotoreggen abwechselnd in Arbeitsstellung abgelassen. Diese Arbeitsweise ist an sich
bekannt, konnte sich aber (wohl aus Preisgründen)
am Markt bisher nicht durchsetzen.

- 32 -

Wenn das zusätzliche Rotoreggen-Aggregat aber sowohl
zur Vereinfachung der Nachbearbeitung eines gepflügten
Feldes, als auch zur Vergrößerung der Drillbreite
bei flacher Saatbettherrichtung einsetzbar ist, ist
die Wirtschaftlichkeit eher gegeben.

- 33 -

Die Erfindung wird anhand einiger in den Zeichnungen
dargestellter Ausführungsbeispiele in der Weise erläutert,
daß Merkmale einer Figur sinngemäß auch auf Ausführungsbeispiele anderer Figuren übertragbar sein sollen.

Es zeigen

Figur 1    eine schematische Draufsicht auf ein
           Feld, das mit einer Gerätekombination
           gelockert, gekrümelt und gepackt wird,

Figur 2    eine ähnliche Draufsicht auf ein Feld,
           das in einem ersten Arbeitsgang streifenweise vorgelockert und in einem zweiten
           Arbeitsgang fertig gelockert, gekrümelt
           und gepackt wird,

Figur 3    eine ähnliche Draufsicht auf ein Feld,
           das mit einem an einem Frontkraftheber
           des Schleppers angebrachten Schichtengrubber neben den Radspuren vorgelockert
           und mit dem am Heckkraftheber angebauten
           Rotorgrubber fertig gelockert, gekrümelt
           und gepackt wird.

- 34 -

Figur 4   eine ähnliche Draufsicht auf ein Feld,
das insbesondere bei der Stoppelbearbeitung
in einem ersten Arbeitsgang ganzflächig
gekrümelt und gleichzeitig streifenweise
hinter den rotierenden Werkzeugen und
neben den Fahrspuren vorgelockert und
in einem zweiten Arbeitsgang vor den
rotierenden Werkzeugen fertig gelockert
und gleichzeitig ein zweites Mal gekrümelt
und gepackt wird.

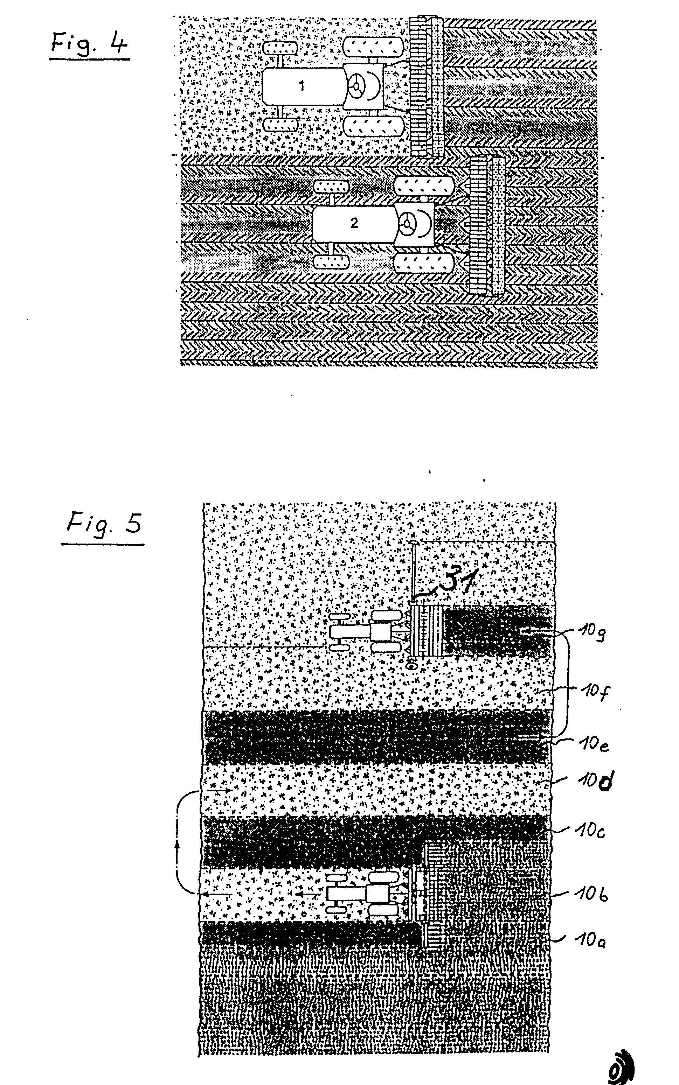

Figur 5   zeigt eine ähnliche Draufsicht auf ein
Feld, bei dem in einem ersten Arbeitsgang
nur das erste, dritte, fünfte Ackerbeet
10a, 10c, 10e gelockert, gekrümelt und
gepackt wird, und die Zwischenbeete 10b,
10d usw. in einem zweiten Arbeitsgang
gelockert und mit der angrenzenden Hälfte
des Nachbarbeetes eingesät werden.

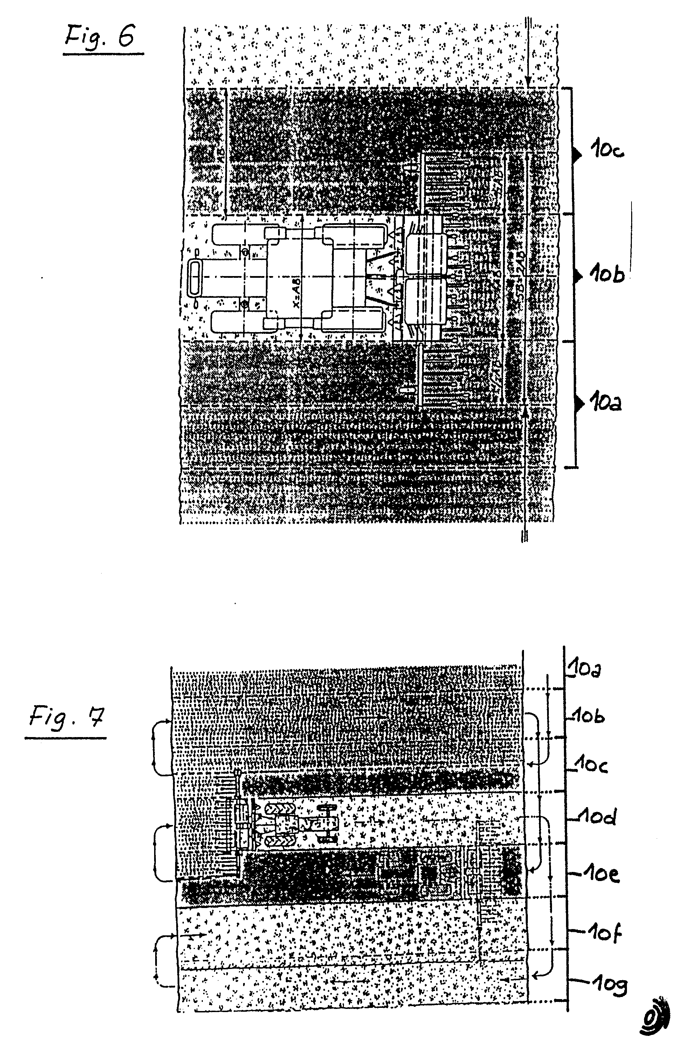

Figur 6   zeigt eine ähnliche Draufsicht in größerem
Maßstab.

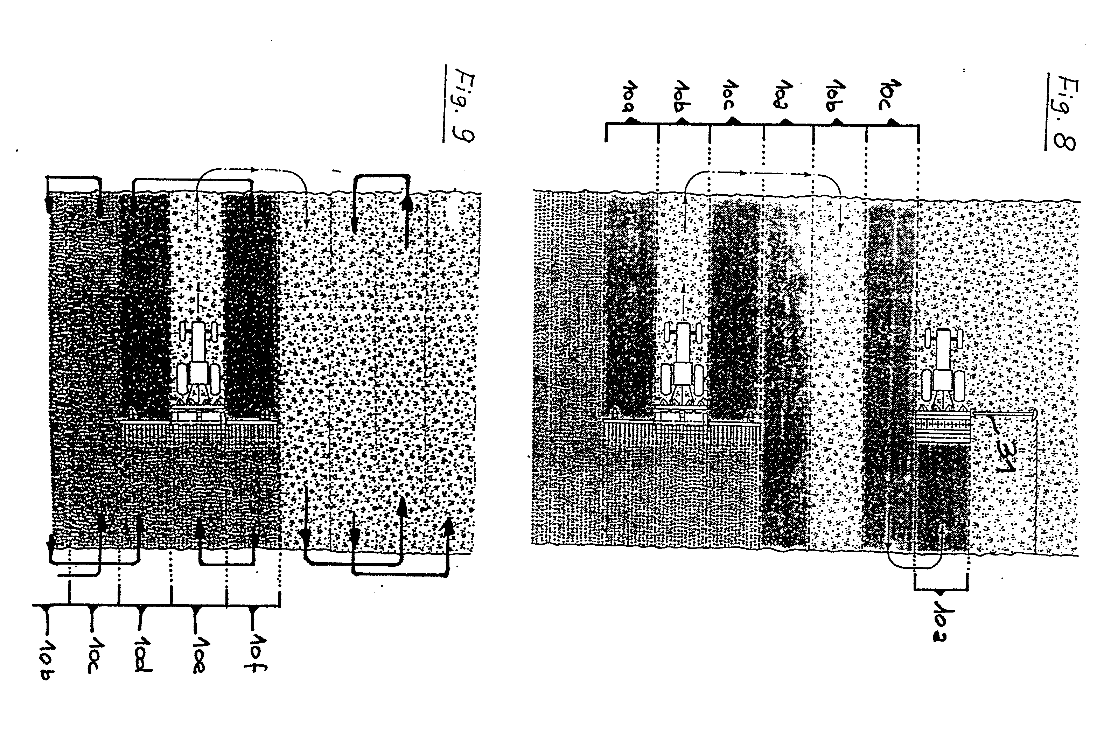

Figur 7   zeigt eine ähnliche Draufsicht auf ein
Feld, das nur mit einem Traktor so bear-

- 34a -

beitet wird, daß jedes Zwischenbeet
spätestens nach der Bearbeitung zweier
seiner Nachbarbeete ebenfalls bearbeitet
und mit der Hälfte des angrenzenden Nachbarbeetes eingesät wird.

Figur 8    zeigt eine ähnliche Draufsicht auf ein
Feld, bei dem zuerst das Ackerbeet 10a,
dann das übernächste Beet 10c und dann
das Zwischenbeet 10b bearbeitet undf
mit den Beeten 10a und 10c eingesät wird.

Figur 9    zeigt eine ähnliche Draufsicht auf ein
Feld, das von zwei Traktoren mit verschiedenen Gerätekombinationen gleichzeitig bearbeitet wird,

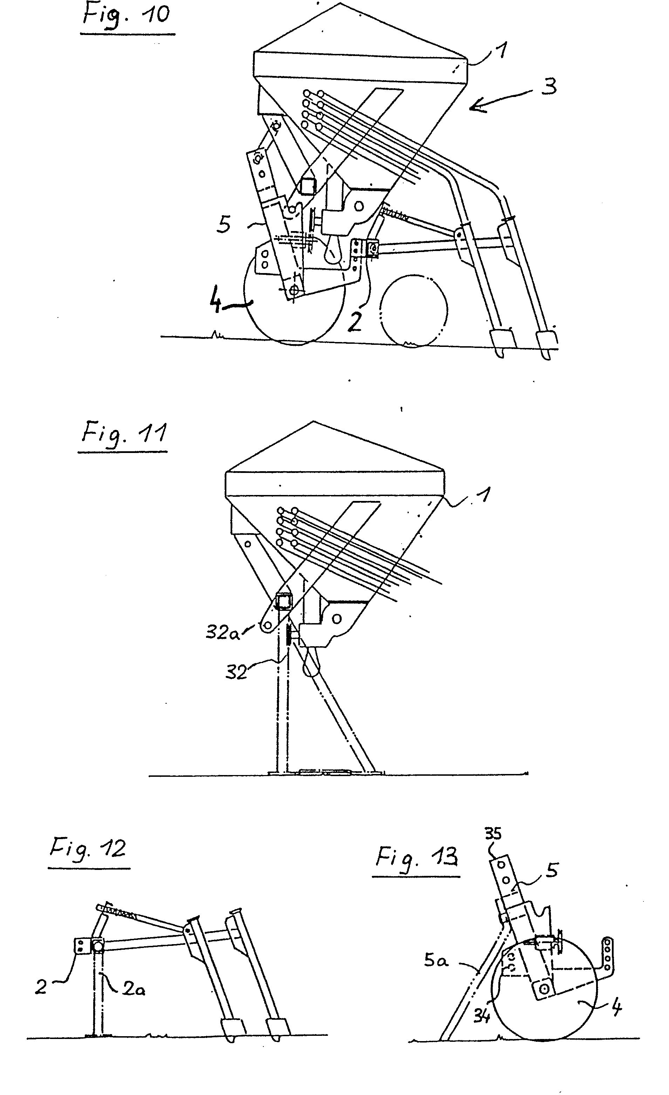

Figur 10   eine schematische Seitenansicht einer
Drillmaschine, deren Saatkasten und Säscharträger lösbar und abnehmbar mit
dem Fahrgestell verbunden sind,

Figur 11   eine Teilansicht des Saatkastens in abgestelltem Zustand,

- 34b -

Figur 12    eine Teilansicht des Säschartträgers
            in abgestelltem Zustand,

Figur 13    eine Teilseitenansicht,

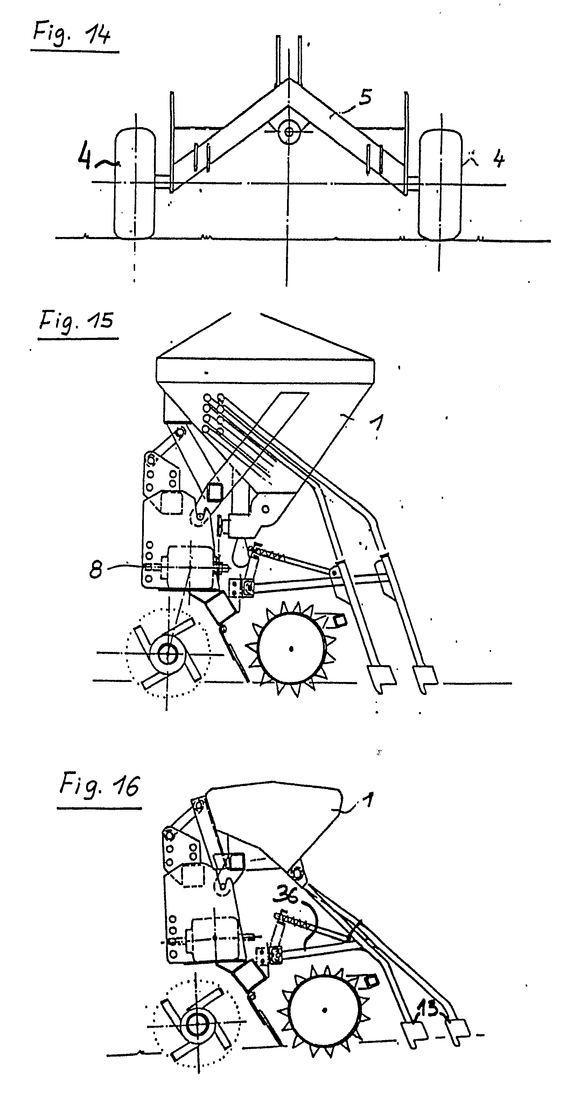

Figur 14    eine Vorderansicht des Fahrgestells
            in abgestelltem Zustand,

Figur 15    eine Teilseitenansicht auf eine Gerätekombination, bei welcher der Saatkasten
            und der Säschartträger auf leicht lösbare
            Weise am Rahmen eines Arbeitsgerätes
            mit rotierenden Werkzeugen angebracht
            sind.

Figur 16    zeigt eine Seitenansicht und

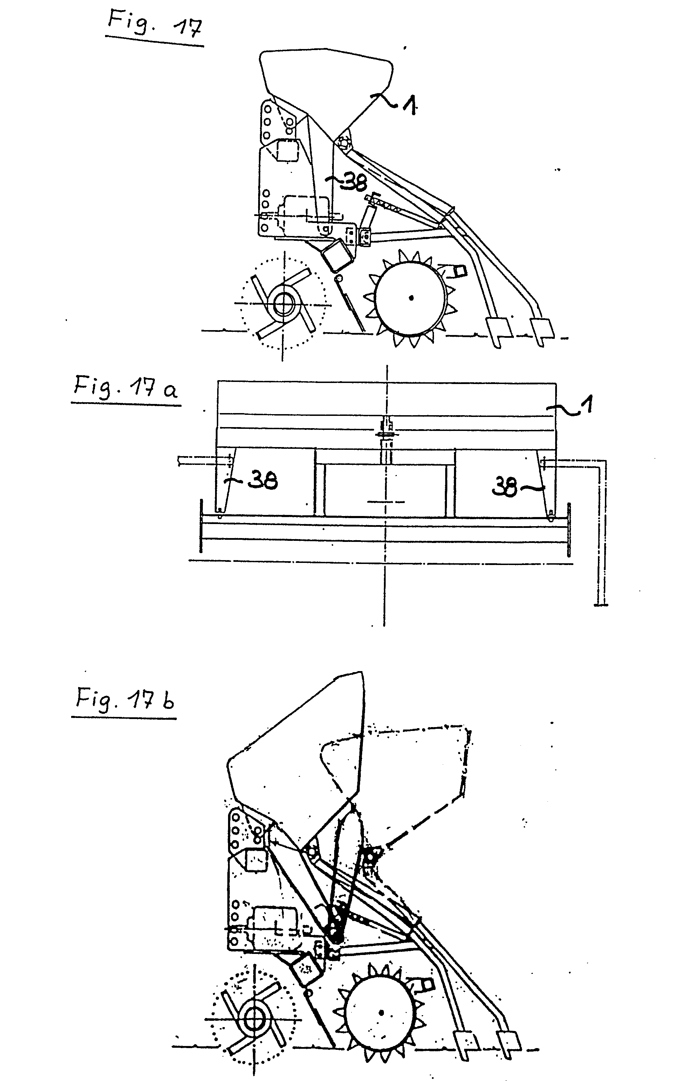

Figur 17    eine Vorderansicht einer Gerätekombination,
            deren Saatkasten außen am Rahmen der
            Arbeitsgeräte anbaubar ist,
            und

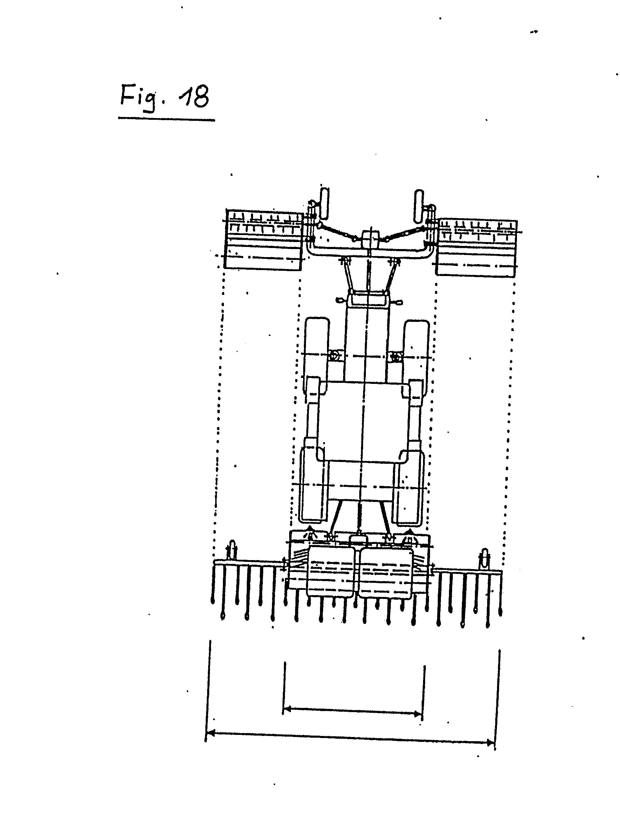

Figur 18    eine Draufsicht auf einen Traktor mit
            Front- und Heckkraftheber angebrachten
            sich in ihrer Arbeitsbreite ergänzenden
            rotierenden Arbeitsgeräten.

0216003

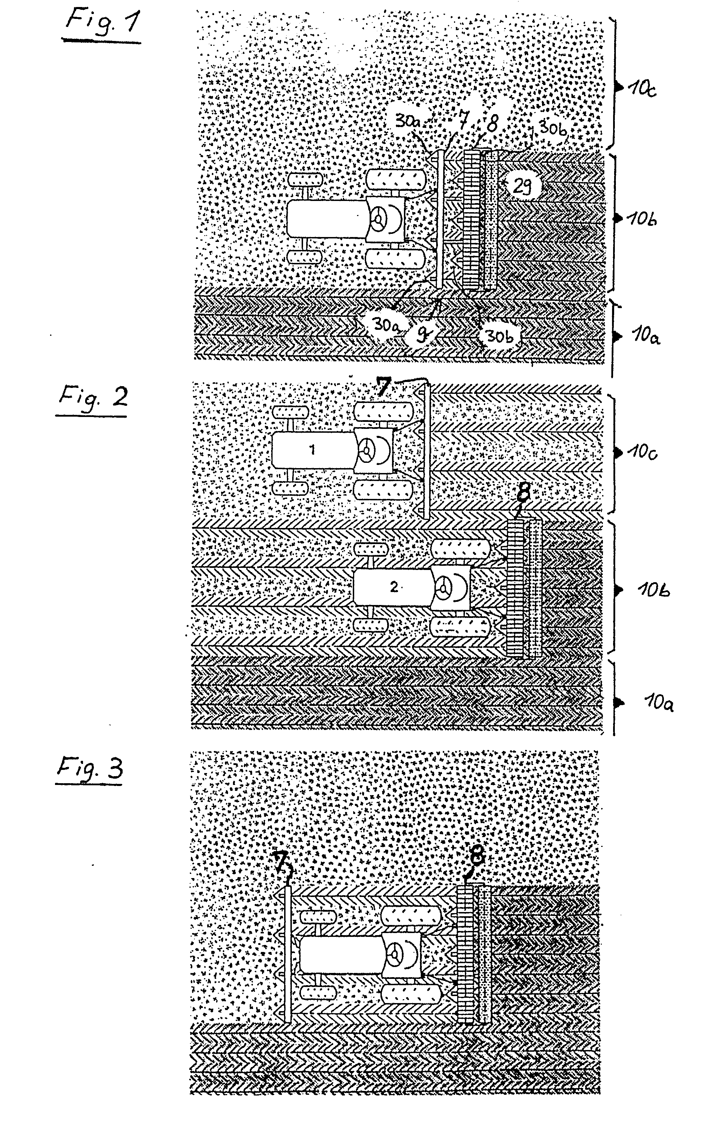

Wie Figur 1 zeigt, können mit der an dem
Schlepperkraftheber angebaute Gerätekombination 9 (von der in Fig. 1 nur das
Arbeitsgerät 7 zur Bodenlockerung und
das Arbeitsgerät 8 zur Saatbettherrichtung dargestellt, die in bekannter Weise
anhängbare oder aufsetzbare Drillmaschine
dagegen nicht eingezeichnet ist), die nebeneinander liegenden Ackerbeete 10a, 10b,
10 c gelockert, saatfertig gekrümelt, gepackt und mit einer angehängten oder aufgesattelten Drillmaschine auch gesät werden,
ohne daß im fertig bestellten Feld eine
verdichtete Radspur des Schleppers verursacht wird.

Wenn das Arbeitsgerät 7 mit seitlich neben den Radspuren 29 und in verhältnismäßig
großen Abständen angeordneten Blattscharen
30a ausgerüstet ist, werden am Arbeitsgerät
8 dazu auf Lücke und in den Radspuren 29,
bzw. hinter der Mitte des Schleppers weitere
Blattschare 30b montiert, um einerseits
den gewünschten Strichabstand der Schare
beider Reihen zu erreichen, andererseits
aber auch Verstopfungen durch Stroh usw.
zu vermeiden und außerdem eine möglichst
kurze Baulänge der Gesamtkombination zu
erzielen.

Da die Arbeitsbreite der Drillmaschine
mit derjenigen der Arbeitsgeräte zur Bodenlockerung 7 und Saatbettherrichtung 8 übereinstimmt, also in der Regel das Mehrfache
der Arbeitsbreite eines üblichen zum selben
Schlepper passenden Pfluges beträgt, erfordern Gerätekombinationen zum Lockern, Krümeln, Packen und Drillen auf schweren Böden
und bei verhm. große Lockerungstiefe verhm.
starke Schlepper, wenn im bestellten Feld keine verdichtete Schlepperspur bestehen
soll.

Wenn nur mittlere Schlepper zur Verfügung
stehen, aber Arbeitsgeräte-Kombinationen
mit großer Arbeitsbreite verwendet werden
sollen, ist es gemäß Figur 2 bekannt, jedes Beet 10a, 10b, 10c in einer ersten
Feldüberfahrt mit dem Arbeitsgerät 7 neben
den Radspuren zunächst nur vorzulockern
und mit demselben oder einem anderen
Schlepper bei der zweiten Feldüberfahrt
in denselben Radspuren, diese fertig zu
lockern, das ganze Ackerbeet zu krümeln
und zu packen, so daß es gegebenenfalls
mit der (in dieser Figur ebenfalls nicht
eingezeichneten) Sämaschine eingesät
werden kann, ohne daß das fertig bestellte Feld eine verdichtete Fahrspur aufweisen müßte.

Wie Figur 3 zeigt, kann dieses Verfahren
auch mittels eines Schleppers mit Frontkraftheber so durchgeführt werden, daß
das Vorlockern neben den Radspuren vor
der Vorderachse und das Fertiglockern,
Krümeln und Packen in den Radspuren (mit
oder ohne gleichzeitigem Säen) am Heckkraftheber und je nach Bodenart, Arbeitstiefe oder -Breite gleichzeitig in
einer Überfahrt oder nacheinander in
mehreren Überfahrten durchgeführt werden
kann.

Wie Figur 4 zeigt, kann aber auch mit
mittleren Schleppern in der ersten Feldüberfahrt das ganze Ackerbeet mit einer Gerätekombination, bei welcher die Blattschare neben den Radspuren und hinter rotierenden Fräsmesserwellen angeordnet sind, zunächst nur sehr flach gekrümelt und streifenweise vorgelockert werden, so daß bei der zweiten Feldüberfahrt die Radspuren gelockert, das ganze Ackerbeet nocheinmal auf die gewünschte Tiefe gelockert und ggf. dabei auch eingesät werden kann. Auch hierbei werden alle Fahrspuren im gelockerten Saatbett vermieden.

Diese bekannten Arbeitsverfahren haben trotz vieler Vorteile noch den Nachteil, daß z.B. im Frühjahr auf schweren Böden entweder eine Tieflockerung unzulässig ist oder nur ein sehr flaches Saatbett bereitet werden muß, weil die Ackerkrume in aller Regel meist viel zu feucht ist, als daß eine – wie auch immer geartete tiefe oder intensive – Bearbeitung zulässig wäre. In diesem Falle kann es nachteilig sein, daß die maximale Arbeitsbreite der Drillmaschine mit Rücksicht auf deren Einsatz in einer auch für die Tieflockerung geeigneten Gerätekombination nicht so groß ist, wie die Arbeitsbreite einer nur zum separaten Drillen vorgesehenen Sämaschine. Deshalb schlägt die Erfindung vor, zur Verringerung der Anzahl der Fahrspuren eine Drillmaschine zu verwenden, deren Arbeitsbreite beim Einsatz als separate Sämaschine das Mehrfache der Arbeitsbreite zur Bodenlockerung und Saatbettherrichtung beträgt, zeitweise aber auch beim Einsatz in der Kombination eine Arbeitsbreite aufweist, die der Arbeitsbreite des anderen
Kombinationsgerätes entspricht.

Wie die Figur 5 zeigt, kann diese Gerätekombination erfindungsgemäß auch so eingesetzt werden, daß im ersten Arbeitsgang
nur jedes zweite Ackerbeet, 10a, 10c usw.
dadurch saatfertig hergerichtet wird, daß
an einem der Arbeitsgeräte 3, 7 oder 8
ein (vorzugsweise hochklappbarer) Spurenreißer 31 angebracht wird, der während
der Bearbeitungs des Ackerbeetes 10a die
für das übernächste Ackerbeet 10c erforderliche Schlepperspzr auf dem Feld markiert.

Das auf diese Weise ausgesparte Ackerbeet 10b wird anschließend gelockert,
saatfertig gemacht und zusammen mit
je einer Hälfte der Beete 10a und 10c
eingesät. Es bleibt also auch hier in
dem fertig bestellten Feld keine ungelockerte Schlepperspur zurück und das
Befahren des Ackers bei schlechtem Wetter wird z.B. nicht da-durch behindert,
daß der Schlepper auf einem vorgelockerten, bzw. vorher gekrümelten, aber  zu
feuchtem Ackerbeet fahren müßte. Dies
ist erfahrungsgemäß insbesondere dann
sehr schwierig oder gar unmöglich, wenn
ein saatfertig hergerichtes Feld vor
dem Säen durch Regenfälle zu sehr befeuchtet wird.

<u>Figur 6</u> zeigt eine schematische Draufsicht auf die Gerätekombination zur Durchführung des in Figur 5 beschriebenen Verfahrens in einem größeren Maßstab.

Wenn nur ein Schlepper zur Verfügung steht und die Bodenlockerung, Saatbettherrichtung und das Drillen ohne zeitliche Verzögerung durchgeführt werden muß, ist es besonders vorteilhaft, wenn die Arbeitsbreite der Drillmaschine sowohl wahlweise gleich der Arbeitsbreite der Geräte zum Lockern, Krümeln ist, oder bei Bedarf auf das zwei- oder dreifache dieser Arbeitsbreite vergrößert werden kann.

Wie <u>Figur 8</u> zeigt, können mit den verstellbaren Spurenreißern mit dem ersten von 2 Schleppern jeweils 2 Ackerbeete 10a und 10 c gelockert und saatfertig hergerichtet werden, zwischen denen ein Ackerbeet 10b im ersten Arbeitsgang ungelockert bleibt, so daß der 2. Schlepper problemlos auf dem ungelockerten Ackerbeet 10b fahren , dieses Ackerbeet lockern und saatfertig herrichten und mit der aufgebauten Drillmaschine dieses Beet und die beiden Nachbarbeete/fertig bestellen kann, ohne daß das Befahren durch zu lockeren oder zu feuchten Boden behindert wird oder im fertigen Ackerbeet eine ungelockerte Spur zurückbleiben würde.

0216003

Die große Arbeitsbreite der Drillmaschine ermöglicht daher  das Striegeln oder Hacken der heranwachsenden
Kulturen mit Pflegegeräten entsprechender Arbeitsbreite, also eine hohe Flächenleistung, die Verringerung der
schädlichen Fahrspuren und des Einsatzes
giftiger Pestizide zur Unkrautbekämpfung.

Um die vorstehenden Arbeitsverfahren auch
mit einem einzigen Schlepper so durchführen zu können, daß das Feld zwischen
der ersten und zweiten Feldüberfahrt
nicht so sehr abtrocknet,        daß z.B.
unterschiedliche Keimbedingungen in
den im ersten und zweiten Arbeitsgang
saatfertig gemachten Ackerbeeten entstehen, schlägt die Erfindung vor, das
Feld bei doppelter Arbeitsbreite der
Drillmaschine in der Weise gemäß
Figur .7 in der Reihenfolge 10a, 10c
(mit ausgeschalteter Drillmaschine),
10 b (mit eingeschalteter Drillmaschine),
10 c (mit ausgeschalteter Drillmaschine)
und 10 d (mit eingeschalteter Drillmaschine) zu befahren und fertig zu bestellen.
Wenn die Drillmaschine die dreifache Arbeitsbreite der Geräte 7 und 8 aufweist (Figur 9),
wäre dieselbe Reihenfolge 10a, 10c (mit
ausgeschalteter Drillmaschine), 10b
(mit eingeschalteter Drillmaschine) anschließend 10d, 10f mit (ausgeschalteter
Drillmaschine, 10e ( mit eingeschalteter
Drillmaschine) usw.

Figur 10 zeigt die Seitenansicht einer
Drillmaschine, die zur Durchführung der
verschiedenen Arbeitsverfahren, zur
wahlweisen Verwendung in einer Kombination mit derselben oder mit einer größeren Arbeitsbreite und zum separaten
Drillen mit möglichst großer Arbeitsbreite verwendbar ist.

Der Saatgutbehälter mit Saatgut-Dosiervorrichtung (nicht vollständig dargestellt) und den Zuführungsschläuchen
für das Saatgut ist durch leicht lösbare Schnellverschlüsse mit dem Rahmen 5
und den Fahrrädern 4 verbunden. An einer
Konsole des Rahmens 5 ist außerdem ein
Säscharträger 2 leicht lösbar, bzw. gegen solche anderer Bauart oder Arbeitsbreite austauschbar befestigt. Die Drillmaschine kann daher in der gezeigten Bauart zum separaten Drillen an einen
Traktor angehängt, aber auch mit anderen
Arbeitsgeräten oder Gerätekombinationen
gekoppelt werden, wenn die entsprechenden Verbindungs- oder Hubgestänge und
ein genügend starker Schlepper zur Verfügung stehen.

Wie Figur 11 zeigt, kann der Saatgutbehälter mit Dosiervorrichtung vom
Fahrgestell getrennt und auf einem Abstellblock 32 so abgestellt werden, daß
er später z.B. von an den Zapfen 32a angreifenden Fanghaken anderer Arbeitsgeräte, erfaßt und leicht mit diesen verbunden werden kann. Das hat den Vorteil,
daß der schwere Rahmen und die Transportträger das Gewicht der gesamten Gerätekombination nicht unnötig belasten.

Wie <u>Figur 12</u> zeigt, kann auch der Säscharträger 2 mit einer Abstellstütze 2a nach dem Lösen des Schnellverschlusses abgestellt und über die Zapfen 2b mit einem anderen Arbeitsgerät verbunden werden.

Wie <u>Figur 13</u> zeigt, kann der Rahmen 5 mit den Transporträdern 4 und einer Stütze 5a auf den Rädern 4 stehend abgestellt und über die Unter- oder Oberlenkerbolzen 34, 35 jederzeit wieder angekuppelt werden. Mit dem Schlepperkraftheber wird er später mit dem Saatgutbehälter und demselben oder einem anderen Säscharträger verbunden.

<u>Figur 14</u> zeigt eine Vorderansicht des Rahmens 5 mit den Transporträdern 4 und Schnellverschlüssen für die Sämaschine 3.

Wie <u>Figur 15</u> zeigt, können der Saatgutbehälter 1 und der Säscharträger durch Fanghaken und den Oberlenker auf die zu diesen Kupplungsvorrichtungen passenden Kupplungsvorrichtungen des Arbeitsgrätes 8 zur Saatbettherrichtung verbunden und dadurch eine besonders kurz gebaute und variabel einsetzbare Kombination geschaffen werden.

Die in Figur 16 dargestellte Bauart
einer pneumatischen Drillmaschine hat
den Vorteil, daß der zentrale Saatgutbehälter 1 direkt hinter dem Schlepper
20 und in Schleppermitte angeordnet werden kann, weil das Saatgut im Luftstrom zur Seite und nach hinten transportiert wird. Die seitlich auskragenden
Abschnitte des Säscharträges können daher bei der Straßenfahrt leicht hochgeklappt werden. Die Zugarme 36 der Säschare 13 sind oberhalb der Packerwalze anbringbar und durch einstellbare Federn
variabel belastbar, um eine sehr günstige
Baulänge zu erzielen.

Wie Figur 17 dargestellt, kann auch ein
Saatgutbehälter 1 mit mechanischer Saatgutdosiervorrichtung verwendet werden,
wenn die Arbeitsbreite der Drillmaschine
insgesamt nicht größer ist, als die maximal zulässige Breite landwirtschaftlicher
Arbeitsgeräte im Straßenverkehr. Dies hat
Vorteile für die Ausrüstung verhm. schmaler,
leichter Traktoren mit Arbeitsgeräten zur
Bodenlockerung, Saatbettherrichtung usw.,
wenn diese z.B. zwischen 1 und 1,5m liegt,
die Drillmaschine aber z.B. eine Arbeitsbreite zwischen 2 und 3 Metern erreichen
soll. Das bringt Vorteile beim Hacken der
Kulturen mit größerer Arbeitsbreite.

Erfindungsgemäß kann der Saatgutbehälter
auch auf außen angebrachten Ständern 38 (Figur 17a)
am seitlichen Rahmen des Arbeitsgerätes
abgestützt bzw. aufgesattelt werden, um
eine tiefe Anordnung des Saatgutbehälters
zu erzielen. Das hat sogar den Vorteil, daß der Saatgutbehälter auf an Zapfen 40 schwenkbaren Ständern 38 angeordnet und beim Ausheben der Gerätekombination am Feldrand in eine vordere Lage/und in Arbeitsstellung in eine nach hinten versetzte Lage abgestützt werden kann, um z.B. die Neigung der Saatleitungsröhren so steil zu halten,wie es notwendig ist, ohne den Saatgutbehälter so hoch lagern zu müssen, daß das Nachfüllen von Saatgut durch Verschwenken des Ständers ermöglicht. Das hat denselben Vorteil wie bekannte hydraulisch betätigte Hubschwenkeinrichtungen für auch separat einsetzbare Drillmaschinen, die als Ganzes sehr hoch ausheben und nach vorne schwenken können. das hat den Nachteil eines sehr schweren und teuren Hubschwenkkrafthebers und denjenigen, daß das Drillmaschinen-Fahrgestell mit Transporträdern auch beim Einsatz der Drillmaschine in einer Kombination immer mitgeführt, also auch ausgehoben werden muß.

Die erfindungsgemäße Lösung ist daher insbesondere auch für kleinere Schlepper und kleinere Arbeitsbreiten besser geeignet und kann außerdem preisgünstiger hergestellt werden.

(Figur 17b)

Wenn z.B. auf schwerem Boden oder im Frühjahr nur ein
sehr flaches Saatbett bereitet werden muß, bzw. darf,
ist es sehr erwünscht, wenn die Drillmaschine die maximal
mögliche Arbeitsbreite aufweist, damit eine große Flächenleistung erzielt und die Zahl der Fahrspuren gering
gehalten werden kann.

Die Erfindung schlägt deshalb gemäß Figur 18 vor, zusätzliche, seitlich ausklappbare Arbeitsgeräte mit starren,
gefederten oder rotierenden Werkzeugen zur Saatbettherrichtung entweder am Frontlader des Schleppers oder am Frontkraftheber anzuordnen, und diese Zusatzgeräte seitlich
ausladend und klappbar am Heckarbeitsgerät anzubringen,
um die Arbeitsbreite des Heckarbeitsgerätes so zu vergrößern, daß sie mit der Arbeitsbreite der Drillmaschine
übereinstimmt.

Die seitlich auskragenden Werkzeugwellen dieses vorzugsweise
auf Stützrädern vor dem Traktor höhenverstellbar abgestützten Gerätes können bei Bedarf auch zur Zerkleinerung
des von einem Pflug gewendeten Bodens ausgenutzt werden.

Da die Erfindung wesentliche Vereinfachungen und Verbesserungen aller Verfahren und Gerätekombinationen zur Bodenlockerung, Saatbettherrichtungh und Bestellung und die
Vermeidung der wichtigsten Nachteile bekannter Verfahren
und Gerätekombinationen ermöglicht, stellt sie einen
wesentlichen Fortschritt dar.

ERNST   W E I C H E L

D 7326 Heiningen                    18.03.1985

## Patentansprüche

1. Verfahren zur Bodenlockerung, Saatbettherrichtung und Bestellung mit Arbeitsgeräten, die einzeln oder miteinander in verschiedener Weise und jeweils mindesten zeitweise auch mit einer Sä- oder Pflanzmaschine kombiniert an Traktoren anbaubar sind, dadurch gekennzeichnet,

daß die Bestellung wahlweise sowohl separat, als auch gleichzeitig mit der Bodenlockerung bzw. Saatbettherrichtung und sowohl mit der       bei der Lockerung üblichen, als auch mit der gegenüber dieser um ein mehrfaches größeren Arbeitsbreite (6a, 6b) durchführbar ist.

2. Verfahren nach Anspruch 1, dadurch gekennzeichnet,

   daß die Bodenlockerung wahlweise sowohl mit derselben (10a) oder mit einem Bruchteil der Arbeitsbreite der Saatbettherrichtung und so durchgeführt wird, daß jedes von der Gerätekombination (9) bearbeitete Ackerbeet (10a) unmittelbar an das bei der vorhergehenden Fahrt über das Feld bearbeitete Ackerbeet (10b) anschließt.

3. Verfahren nach einem der Ansprüche 1 oder 2, bei dem das Drillen zeitweise mit der doppelten Arbeitsbreite (6a) des Gerätes zur Bodenlockerung (7) durchgeführt wird,

   dadurch gekennzeichnet,

   daß nach der Lockerung und saatfertigen Herrichtung eines Ackerbeetes (10a) das übernächste Ackerbeet (10c) bearbeitet wird, usw., und daß das zwischen den bearbeiteten Ackerbeeten (10a, 10c) vorübergehend unbearbeitet gebliebenen Ackerbeet (10b) gleichzeitig mit der Bestellung der Hälfte des Nachbarbeets (10a, 10c) gelockert, saatfertig hergerichtet und eingesät wird.

4. Verfahren nach einem der vorhergehendnen Ansprüche, bei welchem die Bodenlockerung wahlweise sowohl mit derselben als auch mit einer auf ein Drittel der Sämaschinen-Arbeitsbreite (6b) verringerten Arbeitsbreite durchgeführt wird.

dadurch gekennzeichnet,

daß das neben einem bearbeiteten Ackerbeet (10a) liegende Ackerbeet erst nach der Bearbeitung des übernächsten Ackerbeetes (10c) gelockert, saatfertig hergerichtet und dabei gleichzeitig mit den vorher gelockerten Nachbarbeeten (10a + 10b) eingesät wird.

5. Verfahren nach einem der vorhergehenden Ansprüche, bei dem der Ackerboden in mehreren aufeinanderfolgenden Arbeitsgängen gelockert und fertig hergerichtet und/ oder bestellt wird,

dadurch gekennzeichnet,

daß im ersten Arbeitsgang mit an einem ersten Schlepper (20a) angebrachten Geräten nur jedes zweite Ackerbeet (10a, 10c) gelockert, saatfertig hergerichtet und ggf. rückverfestigt wird, und daß in einem zweiten Arbeitsgang mit an einem zweiten Schlepper (20b) angebrachten Arbeitsgeräten (7, 8) das Ackerbeet (10b), auf dem der Traktor (20b) fährt, gelockert, saatfertig hergerichtet, rückverfestigt und zusammen mit den angrenzenden, im ersten Arbeitsgang gelockerten und saatfertig hergerichteten Ackerbeeten (10a + 10c) eingesät wird.

6. Verfahren nach Anspruch 5, dadurch gekennzeichnet,

daß beim ersten Arbeitsgang jeweils zwei nebeneinander liegende Ackerbeete (10a, 10c, 10c, 10e) gelockert, saatfertig hergerichtet und rückverfestigt werden, und daß das angrenzende Ackerbeet (10b) im ersten Arbeitsgang ungelockert bleibt und erst im zweiten Arbeitsgang gelockert, saatfertig hergerichtet und zusammen mit je einem der seitlich an dieses Ackerbeet angrenzenden Ackerbeete (10a, 10c) eingesät wird.

7. Verfahren nach einem der vorhergenden Ansprüche
   dadurch gekennzeichnet,
   daß das Drillen zeitweise unter Verwendung.des lösbar mit einem der anderen Arbeitsg.    verbundenen Saatgutbehälters (1) und des Säscharträgers (2) der Drillmaschine (3), und zeitweise·unter Verwendung des an dem mit Transporträdern (4) versehenen Rahmen (5) der Drillmaschine (3) lösbar angekuppelten Saatgutbehälters (1) und Säscharträgers (2) erfolgt.

8. Verfahren nach einem der vorhergehenden Ansprüche,
   dadurch gekennzeichnet,
   daß dem Saatgutbehälter (1) in bekannter Weise aus einem Vorratsbehälter (17) für das Saatgut, der z.B. auf die Ladepritsche (18) oder am Frontlader (19) des Traktors (20) befestigt wird, kontinuierlich oder in gewissen Zeitabständen weiteres Saatgut mittels mechanischer oder pneumatischer Fördereinrichtungen (21) zugeführt wird./

9. Gerätekombination zur Ausführung des Verfahrens nach einem der Ansprüche 1 bis  , mit wenigstens einer
   auch
   mit Arbeitsgeräten zur Bodenlockerung und Saatbettherrichtung kombinierbaren Drillmaschine,
   dadurch gekennzeichnet, daß die Drillmaschine (3) eine an einem auf Rädern (4) fahrbaren Rahmen (5) angebrachten Saatgutbehälter (1) mit einer angetriebenen Saatgutdosiervorrichtung (1a) und Austrittsöffnungen (1b) für das Saatgut aufweist, die über Saatleitungsröhren (1c) mit den am Rahmen (5) angebrachten Haltestangen (12) befestigten Säscharen (13) verbunden ist, daß der Saatgutbehälter (1) mit der Saatgutdosiervorrichtung (1a) mittels leicht lösbarer Schnellverschlüsse (11) mit dem Rahmen (5) kuppelbar ist, und daß die Haltestangen (12) für die Säschare (13) an einem mit dem Rahmen (5) ebenfalls leicht lösbar verbundenen Säscharträger (2) angelenkt sind.

10. Gerätekombination mit Sämaschine nach einem der Ansprüche 1 - 9
dadurch gekennzeichnet,
daß der Saatgutbehälter (1) und die Saatgutdosiervorrichtung (1a) wahlweise entweder am Rahmen (5) oder an einem Schlepperanbaugerät (7) zur Bodenlockerung und/oder Saatbettherrichtung (8) anbringbar sind.

11. Gerätekombination mit Sämaschine nach einem der Ansprüche 10
dadurch gekennzeichnet,
daß der Säscharträger (2) wahlweise am Rahmen (8a) des Gerätes zur Saatbettherrichtung (8) und/oder am Rahmen (14a) eines Gerätes zur Rückverfestigung (14) des Saatbettes anbringbar ist.

12. Gerätekombination mit Sämaschine nach einem der vorhergehenden Ansprüche,
dadurch gekennzeichnet,
daß sowohl der Saatgutbehälter (1) mit Saatgutdosiervorrichtung (1a), als auch der Säscharträger (2) jeweils wahlweise entweder am Rahmen (5) der Drillmaschine (3),
als auch an anderen Arbeitsgeräten zur Saatbettherrichtung
(8) bzw. zur Rückverfestigung des Saatbettes (14) anbringbar sind.

13. Gerätekombination mit Sämaschine nach einem der vorhergehenden Ansprüche,
dadurch gekennzeichnet,
daß ein auf dem Erdboden laufendes Antriebsrad (15)
für die Saatgutdosiervorrichtung (1a) wahlweise am
Rahmen (5) der Drillmaschine (3), oder am Saatgutbehälter (1) oder an einem Gerät zur Saatbettherrichtung mit
motorisch angetriebenen Werkzeugen (8), oder an einem Arbeitsgerät (14) zur Rückverfestigung anbringbar und über
eine an sich bekannte Gelenkwelle (16) mit der Dosiervorrichtung (1a) für das Saatgut kuppelbar ist.

14. Gerätekombination mit Sämaschine nach einem der vorhergehenden Ansprüche,
dadurch gekennzeichnet,
daß eines der Arbeitsgeräte (7,8,14,3) mit vorzugsweise
schwenk- oder klappbar aufgehängten Spuranzeigern ausgerüstet sind, die eine neue Fahrspur jeweils im übernächsten
Ackerbeet für den Traktor markieren.

15. Gerätekombination mit Sämaschine nach einem der vorhergehenden Ansprüche,

dadurch gekennzeichnet,

daß mehrere Säscharträger (2a, 2b, 2c) mit z.B. in unterschiedlichem Abstand zueinander angebrachten oder verschiedenartig gebauten, an sich bekannten, Säscharen (13) abwechselnd und leicht lösbar entweder am Rahmen (5) der Drillmaschine oder am Rahmen (8a, 14a) des Gerätes zur Saatbettherrichtung oder Rückverfestigung des Saatbettes anbringbar sind.

16. Gerätekombination mit Sämaschine nach einem der vorhergehenden Ansprüche,

dadurch gekennzeichnet,

daß die Haltestangen (12) für die Säschare (13) an dem Säscharträger (2) einzeln oder in Gruppen leicht lösbar befestigt und daher auch einzeln oder in Gruppen am Rahmen anderer Arbeitsgeräte (7, 8, 14) anbringbar sind.

17. Gerätekombination mit Sämaschine nach einem der vorhergehenden Ansprüche,

dadurch gekennzeichnet,

daß zwei Säschare (13a, 13b) an einer, an einem Längsführungsrohr (22) befestigten, um eine in Fahrtrichtung gerichtete Achse (23) pendelnden Querachse (24) in vorzugsweise verstellbaren Abständen (25) angeordnet sind.

18. Gerätekombination mit Sämaschine nach einem der vorhergehenden Ansprüche,

dadurch gekennzeichnet,

daß die Säschare (13) hinter höhenverstellbaren und den Erdboden etwas verdichtenden Laufrollen (26) angebracht sind.

19. Gerätekombination mit Sämaschine nach einem vorhergehenden Ansprüche,

dadurch gekennzeichnet,

daß hinter den Säscharen (13) Druckrollen (27) und/oder Zustreicher (28) angeordnet sind.

20. Gerätekombination mit Sämaschine nach Anspruch 1, bei dem mehrere Säscharträger (2a, 2b, 2c) wahlweise mit einem Saatgutbehälter (1) kuppelbar sind,

dadurch gekennzeichnet,

daß wenigstens einer der Säscharträger (2b) die doppelte Arbeitsbreite (6) eines anderen, im Wechsel verwendbaren Säscharträgers (2a) aufweist.

21. Gerätekombination mit Sämaschine nach Anspruch 2, dadurch gekennzeichnet,

daß wenigstens einer der Säscharträger (2c) die dreifache Arbeitsbreite (6) eines anderen, im Wechsel verwendbaren Säscharträgers (2a) aufweist.

Fig. 1

Fig. 2

Fig. 3

Fig. 4

Fig. 5

31

10g
10f
10e
10d
10c
10b
10a

Fig. 6

10c

10b

10a

Fig. 7

10a

10b

10c

10d

10e

10f

10g

Fig. 8

10a

10c

10b

10a

10c

10b

10a

31

Fig. 9

10f

10e

10d

10c

10b

0216003

Fig. 10

1

3

5

4

2

Fig. 11

1

32a

32

Fig. 12

2

2a

Fig. 13

35

5

5a

34

4

Fig. 14

4 — 4

5

Fig. 15

1

8

Fig. 16

1

36

15

0216003

Fig. 17

1

38

Fig. 17 a

1

38

38

Fig. 17 b

Fig. 18